# EUROPÄISCHE PATENTSCHRIFT

(11) **EP 2 673 222 B1**
(45) Veröffentlichungstag und Bekanntmachung des Hinweises auf die Patenterteilung: **13.06.2018**
(21) Anmeldenummer: 12701982.6
(22) Anmeldetag: 26.01.2012
(51) Int. Cl.: B65G 47/84, B67C 3/24

(54) **BEHÄLTERTRANSPORTVORRICHTUNG MIT NACHGIEBIGEN FLASCHENAUFLAGEN**
CONTAINER TRANSPORT DEVICE HAVING PLIABLE BOTTLE SUPPORTS
DISPOSITIF DE TRANSPORT DE RÉCIPIENTS À SUPPORTS DE BOUTEILLE FLEXIBLES

(30) Priorität: 10.02.2011 DE 102011010954; 10.02.2011 DE 102011010955
(43) Veröffentlichungstag der Anmeldung: 18.12.2013
(73) Patentinhaber: KHS GmbH, 44143 Dortmund (DE)
(72) Erfinder: FAHLDIECK, Andreas, 55743 Idar-Oberstein (DE); KRULITSCH, Dieter-Rudolf, 55545 Bad Kreuznach (DE)
(86) Internationale Anmeldenummer: PCT/EP2012/000335
(87) Internationale Veröffentlichungsnummer: WO 2012/107173

(56) Entgegenhaltungen:
- WO-A1-2008/009410
- DE-A1- 2 541 611
- FR-A3- 2 934 851
- US-A1- 2005 011 730
- US-A1- 2010 077 703

## Beschreibung

Die Erfindung betrifft eine Behältertransportvorrichtung in der Bauweise eines Schleif- oder Schiebesternrades, welche eine Vielzahl von Haltetaschen bzw. -einrichtungen zum Arretieren und Halten von Flaschen oder dergleichen Behälter aufweist.

Die DE 10 2008 023 776 A1 offenbart eine Behandlungsmaschine für Flaschen oder dergleichen Behälter, mit einem Rotor bzw. umlaufenden Hauptstern, an dem mehrere Behandlungsstationen angeordnet sind. Um die Lagerung des Hauptsterns bei ausreichender Stabilität und reduzierten Kosten zu realisieren, schlägt die DE 10 2008 023 776 A1 vor, dass die Lagerung des Rotors über mehrere, um die Maschinenachse verteilt angeordnete und die Lageranordnung bildende Rollen erfolgt.

In der GB 2 187 720 A ist ebenfalls eine Behälterbehandlungsanlage offenbart. Beispielsweise offenbart die GB 2 187 720 A einen Verschließer, welcher ein Sternrad mit entsprechenden Halteeinrichtungen hat. An Transporttaschen ist ein entfernbarer Einsatz angeordnet, welcher eine quasi V-förmige Öffnung hat und welcher an einer seiner Flanken einer Verzahnung aufweist, die mit der Flasche in Reibungseingriff gebracht wird. So könne die Flasche bei dem Verschließen mit einer Schraubkappe gehalten werden, ohne, dass die Flasche mitdreht.

Die DE 697 28 396 T2 befasst sich mit einer Bearbeitungsmaschine, zum Beispiel mit einer Etikettiermaschine. Diese weist ein Sternrad auf, an welchem Etikettiervorrichtungen angeordnet sind. Dem Sternrad können Behälter über eine Zufuhr-Vorrichtung bzw. über ein Vorschub-Sternrad (Schiebestern) zugeführt werden. Die Zufuhr-Vorrichtung ist als Schleif- oder Schiebesternessternrad ausgeführt, welcher entsprechend ausgeführte Zahntaschen (Halteeinrichtung) aufweist. Das Sägezahnsternrad bringt die von einer Einlaufscheibe beschleunigten Flaschen auf Teilung. Eine weitere Behandlungsmaschine für Flaschen oder dergleichen Behälter ist aus der Druckschrift WO 2008/009410 A1 bekannt, wobei die Behandlungsmaschine wenigstens ein Transportelement, wenigstens eine an diesem Transportelement gebildete Behandlungsstation zur Behandlung der Behälter auf einer Bewegungsbahn des Transportelementes zwischen einem Behältereinlauf und einem Behälterauslauf sowie Funktionselemente am Transportelement und/oder an einem mit dem Transportelement nicht mitbewegten Maschinengestell zur Durchführung der Behandlung aufweist. WO 2008/009410 A1 offenbart eine Behältertransportvorrichtung nach dem Oberbegriff des Anspruchs 1.

In der DE 10 2008 022 705 A1 ist offenbart, dass die einlaufenden Flaschen teilweise zu tanzen beginnen und ggf. die gewünschte Teilung variieren, so dass es zu Zerstörungen kommen kann, beispielsweise an den Greifarmen der für die Flaschen vorgesehenen Greifer. Um daher eine passive, exakte Zentrierung bzw. Fixierung der einlaufenden Flasche in dem Sägezahnstern bei gleichzeitiger Beruhigung der Eigenbewegung der Flaschen zu erreichen, schlägt die DE 10 2008 022 705 A1 vor, an jedem Sägezahnausschnitt an der der etwa radial ausgerichteten Anlagekante gegenüberliegenden Seite des Sägezahnausschnittes ein federbelastetes Klingenelement anzuordnen. Diese Maßnahme hat sich in der Praxis bewährt, so dass der Flaschenhals exakt in die Anlaufkante des Sägezahnausschnittes gedrückt wird, womit sich automatisch eine exakte Einhaltung der Teilungsabstände ergibt. Gleichzeitig wird erreicht, dass eine eventuell tanzende oder vibrierende Flasche durch diese festere Fixierung in ihrer Bewegung beruhigt wird.

Eingangs genannte Behandlungsmaschinen sind also in unterschiedlichen Ausführungen, z.B. als Füllmaschinen, Etikettiermaschinen, Inspektionsmaschinen oder Rinser bekannt. Eingangs genannte Behälter können beispielsweise als Flaschen für Flüssigkeiten, beispielsweise für Getränke verwendet werden. Die Behälter z.B. Flaschen können aus einem transparenten oder transluzenten Material, beispielsweise aus Glas oder aus einem transluzenten Kunststoff, z.B. PET bestehen. Denkbar ist aber auch, dass die Behälter aus anderen Materialien bestehen und mit anderen Füllgütern befüllbar sind. Üblicherweise weisen die Behälter, also auch PET-Flaschen, einen so genannten Neckring auf, mit welchem die Flasche transportiert werden können. In dem Falle, dass die Behandlungsmaschine als Verschließer ausgeführt ist, werden die gefüllten noch unverschlossenen Flaschen mit Schiebesternen vom Füller zum Verschließer transportiert, aber auch mit dem Einleitstern bzw. mit dem Schiebestern zum Hauptkarussell gefördert. Die Schiebesterne haben Taschen in welchen sich die Flaschen einlegen können. Insofern können die Schiebesterne auch als Sägezahnstern bezeichnet werden, welche oben bereits erwähnt und gewürdigt sind. Der Schiebestern greift mit seiner Taschenkante so unter den Neckring. Die Transporttasche ist also Bestandteil einer Halteeinrichtung. Gegenüber liegend dazu ist eine Stützkurve vorgesehen, welche ebenfalls unter den Neckring greift und auf welchem die Flaschen in Transportrichtung abrutschen können.

Sinnvoller Weise sind die einzelnen Komponenten anpassbar aufeinander abgestimmt. So sind die einzelnen Komponenten in gewissem Maße verstellbar, um so zum Beispiel Abweichungen beispielsweise des Neckrings, welcher bei unterschiedlichen Flaschenserien in seinen Dimensionen auch unterschiedlich ausgeführt sein kann, ausgleichen zu können. Dazu sind aber Einstellarbeiten erforderlich, welche dennoch eine gewisse Produktionsunterbrechung hervorrufen. Zudem ist ein Bestreben erkennbar, den Neckring aufgrund von Materialersparniswünschen nicht nur in seiner Materialdicke, sondern auch in seiner radialen Erstreckung zu reduzieren. Dieses bestreben kann so weit gehen, dass die zuvor erwähnten Ausgleichsmöglichkeiten der Komponenten nicht mehr ausreichen, so dass der Neckring nicht mehr genügend Halt hat und droht zwischen der Stützkurve und der Transporttasche des Schiebesterns durchzufallen. Möglich ist aber auch, dass sich z.B. der Hauptstern des Füllers aufgrund der physikalischen Gesetzmäßigkeiten in seinem Umfang verändert, was sich insbesondere auf die Betriebssicherheit an der Übergabe vom/zum Schieberstern auswirkt. Insbesondere die Wärmeausdehnung bei Füllerkarussellen führt dazu, dass sich der Teilkreisdurchmesser um mehrere Millimeter verändert (z.B. Kaltfüllen bei 6°C; Heißfüllen bei 90°C). Aber auch die normale betriebsbedingte Erwärmung der Karusselle verändert die Übergabesituation und erfordert ein regelmäßiges Ein- bzw. Nachstellen der Flaschenübergaben, welche genau auf den Betriebspunkt/-temperatur abgestimmt sein muss. Denn sowohl bei zu großen als auch bei zu kleinen Übergabemaßen können Störungen auftreten, welche natürlich unerwünscht sind.

Von daher liegt der Erfindung die Aufgabe zugrunde, eine Behältertransportvorrichtung der Eingangs genannten anzugeben, welche mit einfachen Mitteln Betriebsstörungen oder umfangreiche Einstellarbeiten auch bei im Radius reduzierten Neckringen oder bei betriebsbedingten Änderungen der Behälterübergabeparameter vermeidet.

Erfindungsgemäß wird die Aufgabe durch eine Behältertransportvorrichtung mit den Merkmalen des Anspruchs 1 gelöst.

Erfindungsgemäß ist vorgesehen, dass die jeweilige Halteeinrichtung einen zur Transportvorrichtung separaten Grundkörper aufweist, welcher zu einer Konterauflage zumindest in Richtung zu einem Zentrum der Transportvorrichtung so ausgeführt ist, dass der Grundkörper sich mit seiner Auflage selbsttätig anpassend an einen Behälterdurchmesser unterhalb eines Neckrings des Behälters an diesen und an den Neckring anlegt, und dass die Halteeinrichtung lösbar mit der Transportvorrichtung verbindbar ist. Zielführend ist, wenn der Grundkörper zumindest in Richtung zu einem Zentrum der Transportvorrichtung nachgiebig, also elastisch ausgeführt ist.

Eine als zumindest in Richtung zu einem Zentrum der Transportvorrichtung vorhandene Nachgiebigkeit ist erfindungsgemäß eine radiale Nachgiebigkeit, was insbesondere bei Transportsternen sinnvoll ist, da hier radiale Kräfte des Behälters in Richtung zum zentrischen Mittelpunkt des Transportsternes direkt auf den Grundkörper einwirken, welche durch die radiale Nachgiebigkeit aufgenommen werden können. Der Grundkörper kann in gewissem Maße auch seitlich, also in oder entgegen der Förderrichtung des Schiebesterns nachgiebig sein. Selbstverständlich kann die Halteeinrichtung mit dem Grundkörper aber auch an einem Linearförderer angeordnet sein, wobei die Halteeinrichtung dann zumindest in Richtung zur Mittellinie axial nachgiebig ist.

Vorteilhaft ist auch, dass der Grundkörper als Teilungselement ausgeführt ist. So hat der Grundkörper eine Mehrfunktion. Zum einen trägt der Grundkörper den Behälter zusammen mit der Konterauflage, welche auch als Stützkurve bezeichnet werden kann, indem der Grundkörper mit seiner Auflage unter den Neckring greift. Weiter sorgt der Grundkörper durch seine radiale Anpassbarkeit dafür, dass der Behälter stets sicher transportiert wird, auch wenn Durchmesseränderungen und/oder betriebliche Veränderungen vorliegen. Zum anderen sorgt der Grundkörper für eine erforderliche Teilung der Behälter innerhalb der Transportvorrichtung, und zwar ohne, dass beispielsweise an einem Transportstern kompliziert herzustellende Taschen angearbeitet werden müssen.

Mit der Erfindung wird so erreicht, dass umfangreiche Einstellarbeiten, insbesondere an Transportsternen entfallen können, wenn der Neckring auch in seiner radialen Erstreckung reduziert ist. Denn die Halteeinrichtung bzw. der Grundkörper kann bezogen auf den Neckring mit einem Übermaß hergestellt werden, da die Halteeinrichtung bzw. deren Grundkörper in sich nachgiebig ist. So kann die Halteeinrichtung bzw. deren Grundkörper auch bei kleinen Neckringdurchmessern unter diese greifen, wobei gegenüber liegend die bekannte Stützkurve vorgesehen ist, auf welcher der Behälter, also die Flasche mit ihrem Neckring in Transportrichtung abrutschen kann. Die erfindungsgemäß ausgeführte Halteeinrichtung bzw. deren Grundkörper kann aber auch auf betriebsbedingte Änderungen selbsttätig reagieren, indem diese bei Ausdehnung des Füllers nachgiebig ist. Mit der Erfindung kann, wie oben bereits kurz erwähnt, also auf eine in dem Transportstern eingebrachte Transporttasche mit ihrer speziellen Ausführung verzichtet werden. Auch kann auf besondere Maßnahmen bzw. Vorrichtungen zum Herandrücken der Behälter in die Transportasche verzichtet werden. Ein Verzicht auf die bisher sehr aufwändig herzustellende Transporttasche wirkt sich neben anderen Vorteilen auch noch reduzierend auf die Bearbeitungskosten des Transport- bzw. Schiebesterns aus. Die Halteeinrichtung deckt so aufgrund der inhärenten radialen Elastizität einen großen Einsatzbereich ab. Selbstverständlich kann es passieren, dass die Halteeinrichtungen bzw. deren Grundkörper auch bei gewissen Dimensionen der Behälter an ihre Grenzen stoßen, so dass ein Austausch auf andere Halteeinrichtungen bzw. Grundkörper sinnvoll sein kann. Da der Wechsel aber werkzeuglos durchgeführt werden kann, ist mit erheblich reduzierter Stillstandszeit zu rechnen.

Die Auflage des Grundkörpers ist vorteilhaft so ausführbar, dass diese etwa mittig eine kreisabschnittsartige Ausnehmung aufweist, in welche sich der Behälter unterhalb des Neckrings einlegen kann. Ansonsten ist die Auflage in Aufsicht gesehen quasi als Quersteg ausgeführt.

Erfindungsgemäß schließen sich an der Auflage bzw. an dem Quersteg jeweils seitlich äußere Federstege an. Die äußeren Federstege weisen einen im Wesentlichen geradlinigen Federarm auf, welcher jeweils in einen gebogen ausgeführten ersten Verbindungsbereich übergeht. Die beiden äußeren Federstege erstrecken sich gleichsinnig etwas aufeinander zu laufend von der Auflage, also von der Wirkseite weg orientiert.

Erfindungsgemäß weist der Grundkörper innere Federelemente auf, welche mit einem Befestigungsbereich des Grundkörpers in Verbindung stehen. Zweckmäßig ist, wenn die jeweils ersten Verbindungsbereiche der äußeren Federstege mit dem Befestigungsbereich in Verbindung stehen. Die inneren Federelemente weisen einen zum jeweils ersten Verbindungsbereich korrespondierenden zweiten Verbindungsbereich auf, welcher in einen Steg übergeht, der mit dem Befestigungsbereich des Grundkörpers fest verbunden ist. Der erste und zweite Verbindungsbereich sind so zu einander ausgeführt, dass beide ineinander greifen können, bzw. ineinander verhakt werden können. Möglich ist auch, eine separate Feder vorzusehen, um die beiden Verbindungsbereiche miteinander zu verbinden. In beiden möglichen Ausgestaltungen wird die Haltevorrichtung bzw. der Grundkörper vorgespannt, wenn beide Verbindungsbereiche miteinander verbunden sind, also entweder ineinander greifen oder mittels der separaten Feder verbunden sind.

Zur lösbaren Verbindung mit der Transportvorrichtung, weist die Halteeinrichtung bzw. der Grundkörper den Befestigungsbereich auf. Der Befestigungsbereich ist bevorzugt als taillierbarer Innenkörper ausgeführt, welcher mit seiner Mittelachse deckungsgleich zur Mittelachse des Grundkörpers ist. Mit seiner Kopfseite ist der Befestigungsbereich in Richtung zur Auflage orientiert. In zweckmäßiger Ausgestaltung weist der Befestigungsbereich einen ersten und zweiten Aufnahmebereich auf, an dem sich jeweils ein erster und zweiter Rastbereich anschließt. Die Aufnahmebereiche sind vom lichten Öffnungsbetrag größer ausgeführt als eine lichte Öffnung der jeweiligen Rastbereiche. Ausgehend von der zur Kopfseite gegenüberliegenden Fußseite ist zunächst der erste Aufnahmebereich angeordnet an sich unmittelbar der erste Rastbereich anschließt. An dem ersten Rastbereich schließt sich der zweite Aufnahmebereich an, welcher in den zweiten Rastbereich übergeht. Der zweite Rastbereich ist so kopfseitig angeordnet. Die Aufnahmebereiche und Rastbereiche sind an Befestigungsbolzen angepasst, welche mit der Transportvorrichtung verbunden sind, und sich von dieser wegerstrecken. Zum Verbinden der Halteeinrichtung mit der Transportvorrichtung werden die Aufnahmebereiche über die Befestigungsbolzen geschoben. Sodann kann die Halteeinrichtung bzw. der Grundkörper radial verschoben werden, so dass die Befestigungsbolzen mit ihrem Umfang an den Rastbereichen anliegen bzw. an deren Wänden hinreichend kraftschlüssig eingeklemmt sind. Möglich ist, die Befestigungsbolzen fußseitig mit einem Halteflansch zu versehen. Dies ist möglich, wenn der Befestigungsbereich an seinem jeweiligen Aufnahmebereich ein Übermaß hat oder ebenfalls nachgiebig ausgeführt ist, so dass dieser bei dem vorbeiführen der Halteflansche ausweichen und nach Passieren wieder in die Ausgangslage zurückgeführt wird. Die Halteflansche könnten so unter die freien Kanten des Rastbereiches greifen, so dass eine zusätzliche Lagesicherung geschaffen ist. Ist die Halteeinrichtung bzw. der Grundkörper mit der Transportvorrichtung verbunden, können die beiden Verbindungsbereiche der äußeren Federstege und der inneren Federelemente miteinander verbunden, also in Eingriff gebracht werden, so dass der Grundkörper quasi federkraftähnlich vorgespannt ist. Dies wirkt sich auch Kraft erhöhend auf die Haltekraft der Rastbereiche auf den jeweiligen Befestigungsbolzen aus.

In weiter günstiger Ausgestaltung liegen die Rastbereiche mit Seitenwänden quasi tangential an dem Befestigungsbolzen an. In weiter bevorzugter Ausgestaltung umfasst der zweite Rastbereich den Befestigungsbolzen annähernd vollumfänglich, was bedeutet, dass ca. ¾ des Umfangs von dem zweiten Rastbereich umgriffen werden. Dies kann auch für den ersten Ratsbereich analog vorgesehen sein. fußseitig kann der Befestigungsbereich geschlossen sein.

Erfindungsgemäß sind Querfederelemente an der Halteeinrichtung bzw. an dem Grundkörper angeordnet. Ein erstes Querfederelement ist der Auflage zugeordnet, wobei das zweite Querfederelement an dem zweiten Rastbereich angeordnet ist. Beide Querfederelemente erstrecken sich von einem äußeren Federsteg zum jeweils gegenüber liegenden. Der erste Querfedersteg kann in bevorzugter Ausgestaltung mit der Auflage in Verbindung stehen, wobei der zweite Querfedersteg in direkten Kontakt mit dem Befestigungsbereich steht. Um den optionalen Flansch des Befestigungsbolzens nicht zu behindern, kann an dem zweiten Querfedersteg noch ein entsprechender Ausschnitt sinnvoller Weise vorgesehen sein. Zumindest der zweite Querfedersteg kann so ausgeführt sein, dass dieser die Gewichtskraft der Flasche aufnehmen kann. Gleiches kann für den ersten Querfedersteg gelten. Beide Querfederstege können aufgrund ihrer Anordnung und Ausführung auch als Blattfeder bezeichnet werden.

Die Halteinrichtung bzw. der Grundkörper ist besonders einfach mit dem Transportsternrad verbindbar, aber auch wieder von diesem lösbar. Vorteilhaft weist das Sternrad, also der Schiebestern, nicht die komplizierte Ausgestaltung als Sägezahn-, Schleif- oder Schiebesternrad auf. Vielmehr können bevorzugt jeweils zwei in Radialrichtung fluchtende Befestigungsbolzen vorgesehen werden, welche jeweils einen Grundkörper halten. So wird eine offene Bauweise erreicht, welche besonders leicht reinigbar ist. Noch dazu können Bohrungen im Sternrad vorgesehen sein, welche die Zugänglichkeit und Reinigbarkeit weiter verbessern. Die Halteeinrichtung ist erkennbar besonders einfach manuell auch ohne Werkzeugeinsatz montierbar und demontierbar. Natürlich kann auch ein einziger Befestigungsbolzen pro Grundkörper vorgesehen sein.

Aufgrund der in sich bestehenden Nachgiebigkeit der Halteeinrichtung bzw. des Grundkörpers ist eine sehr große Flexibilität bei unterschiedlichen Neck- bzw. Mündungsdurchmessern gegeben.

Zielführend ist aber, dass die Halteeinrichtung bzw. deren Grundkörper in einer bevorzugten Ausgestaltung nicht entlang der Radialachse (welche durch die in Radialrichtung angeordneten Befestigungsbolzen vorgegeben ist) verschoben wird, sondern quasi elastisch ausweicht. Gleichwohl ist die Auflage stets unter dem Neckring angeordnet, greift also immer unter diesen, so dass der Behälter stets lagesicher auch auf bzw. entlang der Stützkurve in Förderrichtung abrutschen kann. Dies wird auch bei kleinsten, noch sinnvollen Neckdurchmessern erreicht, da die Halteeinrichtung bzw. der Grundkörper für diesen ausgelegt ist. Bei größeren Durchmessern unterhalb des Neckrings weicht die Halteeinrichtung dann in sich elastisch aus, was durch das Zusammenwirken der einzelnen Komponenten erreicht wird.

Möglich ist, den Grundkörper für sich allein an dem Sternrad, bzw. an der Transportvorrichtung anzuordnen. Sinnvoll ist aber auch, wenn noch ein Schiebe- oder Führungselement vorgesehen wird, welches auf der zum Grundkörper gegenüberliegenden Seite des Transportsterns angeordnet sein kann. Das Schiebe- oder Führungselement kann im Wesentlichen parabolisch mit einer sich vom geschlossenen Ende erweiternden Öffnung ausgeführt sein. So ist auch dieses Element besonders einfach ausgeführt und an unterschiedliche Mündungsöffnungen angepasst. Das Schiebe- oder Führungselement bewirkt ein Mitnehmen der mittels des Grundkörpers und der Stützkurve gehaltenen Flasche in Transportrichtung. Allerdings steht das Schiebe- oder Führungselement oberhalb des Neckrings mit der Flasche in entsprechenden Kontakt. Das Schiebe- oder Führungselement kann natürlich auch etwas nachgiebig ausgeführt sein, was bedeutet, dass dessen Schenkel etwas federbedingt ausweichen können, um die Flasche in kraftschlüssigen Kontakt mit beiden Schenkeln zu führen.

Möglich ist aber natürlich auch eine Ausgestaltung, bei welcher der Grundkörper und das Schiebe- oder Führungselement auf derselben Seite, bevorzugt auf einer in Einbaulage oberen Seite des Transportsterns angeordnet sind. In bevorzugter Ausführung ist der Transportstern an seinem Außenrandbereich bezogen auf die restliche Materialdicke dünner ausgeführt, bzw. weist an der vorgesehenen Montagestelle der Halteeinrichtung bzw. des Grundkörpers eine entsprechende Ausnehmung auf. Die Halteinrichtung wird in diese vorgesehene Montagestelle eingesetzt. Um einen Höhenausgleich zu bewirken, also um zu erreichen, dass das Schiebe- oder Führungselement oberhalb des Neckrings an der Flaschenmündung angreift ist ein Ausgleichselement vorgesehen, welches den Grundkörper quasi gehäuseähnlich abdeckt. An der Deckelwand des Ausgleichselementes ist vorteilhaft das Schiebe- oder Führungselement angeordnet.

In weiter möglicher Ausgestaltung ist die Halteeinrichtung welche beispielhaft aus dem Grundkörper, dem Ausgleichselement und dem Schiebe- oder Führungselement gebildet ist, mit gemeinsamen Bolzen mit dem Transportstern verbunden. Möglich ist noch eine Feder vorzusehen, welche auf den Grundkörper einwirkt, weswegen der Grundkörper in Abkehr zu der kraftschlüssigen Verbindung über den Rastbereich Langlöcher aufweisen kann, um den Grundkörper so nicht nur 9 in sich nachgiebig auszuführen sondern auch eine gewisse radiale Verschiebbarkeit zu erreichen.

Weitere vorteilhafte Ausgestaltungen der Erfindung sind in den Unteransprüchen und der folgenden Figurenbeschreibung offenbart. Es zeigen
Fig.1 eine Behälterbehandlungsmaschine in prinzipieller Ansicht,
Fig.2 eine Transportsituation in Seitenansicht,
Fig.3 einen Grundkörper einer Halteeinrichtung als Einzelheit in einer Ansicht von oben,
Fig.4 den Grundkörper aus Figur 3 in einer perspektivischen Ansicht von unten
Fig.5 bis
Fig.7 einen Montageablauf der Halteeinrichtung an eine Transportvorrichtung,
Fig.8 eine Montagesituation des Grundkörpers an einem Schiebestern zum einen in Aufsicht und zum anderen von unten,
Fig.9 die Montagesituation aus Figur 8 in jeweils perspektivischer Ansicht,
Fig.10 eine Transportsituation in perspektivischer Ansicht,
Fig.11 ein weiteres Ausführungsbeispiel zur Figur 8 mit einem Schiebe- und Führungselement, und
Fig. 12 ein Ausführungsbeispiel, das nicht Teil der Erfindung ist, zum einen in perspektivischer und zum anderen in Explosionsdarstellung.

In den unterschiedlichen Figuren sind gleiche Teile stets mit denselben Bezugszeichen versehen, weswegen diese in der Regel auch nur einmal beschrieben werden.

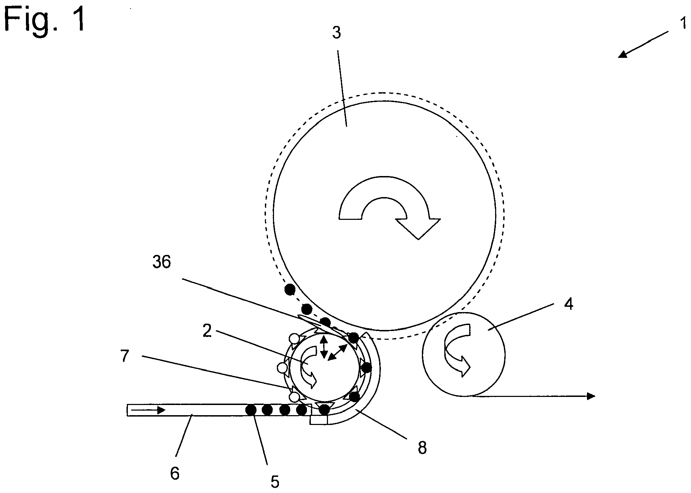

Figur 1 zeigt eine Behälterbehandlungsmaschine 1, welche beispielhaft als Füllmaschine oder Füller ausgeführt ist. Diese ist im Allgemeinen bekannt.

Die Behälterbehandlungsmaschine 1 weist Transportvorrichtungen 2, 3 und 4, also einen Einleitstern 2, einen Hauptstern 3 und einen Ausleitstern 4 auf. Dem Einleitstern 2 werden Behälter 5 auf einem Förderer 6 zugeführt. Die Behälter 5 werden von dem Einleitstern 2 zum Hauptstern 3 oder Füllerkarussell 3 und mit diesem zum Ausleitstern 4 transportiert. An dem Füllerkarussell 3 sind Füllstationen angeordnet.

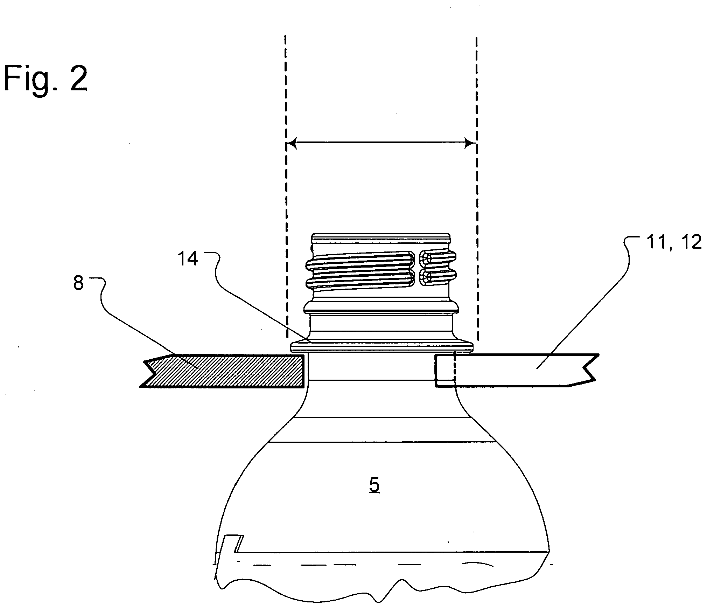

Beispielsweise kann der Einleitstern 2 als Schiebestern 2 bezeichnet werden, welcher eine Vielzahl von Halteinrichtungen 7 zum Halten der Behälter 5 wie zum Beispiel PET-Flaschen aufweist. In Figur 1 ist anhand der gefüllten Kreise (welche die Behälter 5 darstellen sollen) erkennbar, dass die Behälter 5 mittels der Halteeinrichtungen 7 zum Hauptstern 3 transportiert werden. Nicht belegte Halteeinrichtungen 7 sind in Figur 1 mit ungefüllten Kreisen dargestellt. Die Halteeinrichtungen 7 sind in Figur 1 vereinfacht dargestellt. Beispielhaft ist der Einleitstern 2 teilumfänglich von einer Konterauflage 8, welche im Folgenden als Stützkurve 8 bezeichnet wird, umfasst, auf welcher die Behälter 5 mit ihren Neckring 14 (Figur 2) abrutschen können. Zudem sind noch bevorzugt feststehende Überleitelemente 36 vorgesehen.

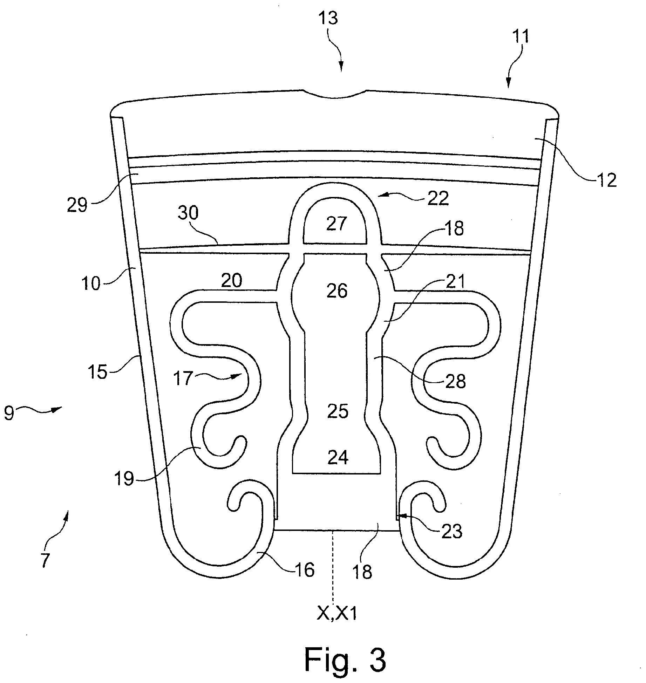

In Figur 3 ist eine Halteeineinrichtung 7, welche einen Grundkörper 9 aufweist als Einzelheit dargestellt. Der Grundkörper 9 ist ein zur Transportvorrichtung 2,3,4 also zum Beispiel ein zum Einleitstern 2 separates Element, welches in sich zumindest in Richtung zu einem Zentrum der Transportvorrichtung, also beispielhaft in radialer Richtung nachgiebig bzw. elastisch nachgiebig ausgeführt ist, wobei die Halteeinrichtung 7 bevorzugt werkzeuglos lösbar mit der Transportvorrichtung verbindbar ist. Auch ein Verbinden kann werkzeuglos durchgeführt werden. In sich nachgiebig bzw. elastisch bedeutet im Sinne der Erfindung, dass der Grundkörper 9 bei Krafteinwirkung nicht in radial Richtung verschoben wird, wie dies z.B. bei federbelasteten Andrückklingen der Fall ist, sondern selbst ausweicht, also quasi gestaucht wird. Die radiale Nachgiebigkeit ist in Figur 1 mittels der Doppelpfeile am Einleitstern 2 angedeutet.

Der Grundkörper 9 ist zunächst in geöffneter Ausgestaltung ausgeführt, ist also an seinen in der Zeichnungsebene dargestellten Ober- und Unterseiten offen, und weist jeweils seitlich gegenüberliegende, äußere Federstege 10 auf. Die Ober- und/oder Unterseite kann natürlich geschlossen bzw. abgedeckt sein, ohne dass die elastische Eigenschaft beeinflusst würde. An seiner Wirkseite 11 weist die Halteeinrichtung 7 eine Auflage 12 auf. Die Auflage 12 erstreckt sich in der Zeichnungsebene quer zwischen den beiden äußeren Federstegen 10. Etwa mittig weist die Auflage 12 eine kreisabschnittsartige Ausnehmung 13 auf, in welche sich der Behälter 5 unterhalb seines Neckrings 14 einlegen kann.

Die äußeren Federstege 10 weisen jeweils einen im Wesentlichen geradlinig ausgeführten Federarm 15 auf, welcher jeweils in einen gebogen ausgeführten ersten Verbindungsbereich 16 übergeht.

Die beiden Federarme 15 weisen beispielhaft einen aufeinander zu orientierten Verlauf auf, so dass sich der Grundkörper von seiner Wirkseite 11 wegorientiert quasi konusförmig etwas verjüngt.

Die Halteeinrichtung 7 bzw. der Grundkörper 9 weist zudem innere Federelemente 17 auf, welche mit einem Befestigungsbereich 18 des Grundkörpers 9 in Verbindung stehen. Auch die äußeren Federstege 10 stehen, wie dargestellt, mit ihrem ersten Verbindungsbereich 16 mit dem Befestigungsbereich 18 in Verbindung.

Die inneren Federelemente 17 weisen jeweils einen zum ersten Verbindungsbereich 16 korrespondierenden zweiten Verbindungsbereich 19 auf, welcher jeweils in einen Steg 20 übergeht, der an dem Befestigungsbereich 18 angelenkt ist. der Steg 20 geht in einen umgekehrt quasi S-förmig ausgeführten Abschnitt über, an welchem sich der zweite Verbindungsbereich 19 anschließt.

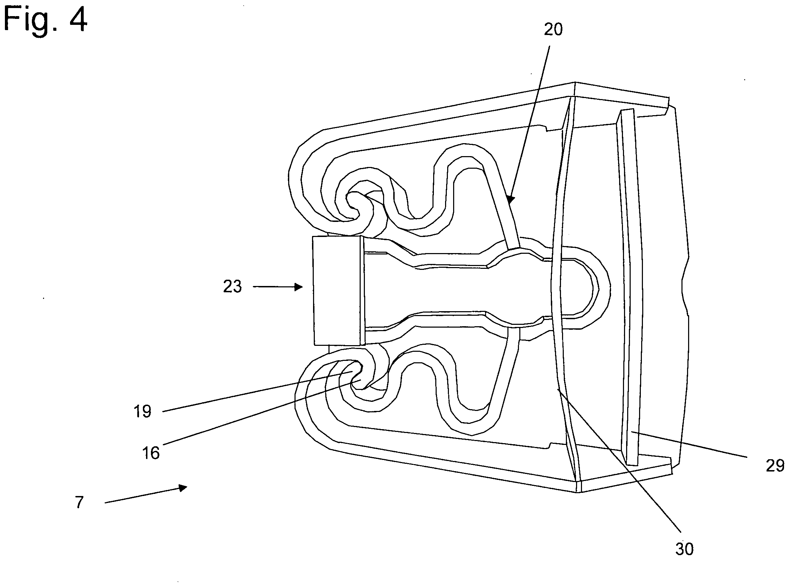

Die beiden Verbindungsbereiche 16 und 19 sind quasi hakenähnlich ausgeführt, so dass beide ineinander greifen können, wie in Figur 4 dargestellt. Denkbar ist aber auch eine separate Feder zwischen beiden Verbindungsbereichen 16 und 19 einzuhängen. Mit beiden Ausgestaltungen wird eine Vorspannung erreicht.

Mittels des Befestigungsbereiches 18 ist der Grundkörper 9 bzw. die Halteinrichtung 7 an der Transportvorrichtung, also zum Beispiel an dem Einleitstern 2 zweckmäßiger Weise werkzeuglos festlegbar.

Der Befestigungsbereich 18 ist bevorzugt als taillierter Innenkörper 21 ausgeführt, welcher mit seiner Mittelachse X1 deckungsgleich zur Mittelachse des Grundkörpers X ist. Mit seiner Kopfseite 22 ist der Befestigungsbereich 18 in Richtung zur Auflage 12 orientiert, zu dieser aber beabstandet. Gegenüberliegend, also fußseitig (Fußseite 23), ist der Befestigungsbereich 18 plattenartig verschlossen.

Der Befestigungsbereich 18 weist fußseitig einen ersten Aufnahmebereich 24 auf, welcher in einen sich daran anschließenden ersten Rastbereich 25 übergeht. Der erste Aufnahmebereich 24 ist fußseitig angeordnet, wobei sich der erste Rastbereich 25 in Richtung zum Kopfbereich erstreckt. An dem ersten Rastbereich 25 schließt sich in Richtung zum Kopfbereich erstreckend ein zweiter Aufnahmebereich 26 an, der in einen zweiten Rastbereich 27 mündet.

Wie erkennbar sind die lichten Öffnungen der beiden Aufnahmebereiche 24 und 26 im Wesentlichen gleich und quasi bauchförmig ausgeführt. Die lichten Öffnungen der Rastbereiche 25 und 27 sind dagegen kleiner als die lichten Öffnungen der Aufnahmebereiche 24 und 26. Der zweite Rastbereich 27 ist kopfseitig vollumfänglich umfasst, und lediglich in Richtung zur Fußseite 23 geöffnet. Der erste Rastbereich 25 ist durch zwei parallel zueinander angeordnete Seitenstege 28 gebildet.

Zwischen den äußeren Federstegen 10 erstrecken sich quer durch den Grundkörper 9 hindurch Querfederelemente 29 und 30, welche in Figur 4 deutlicher erkennbar sind. Ein erstes Querfederelement 29 ist kopfseitig im Bereich der Auflage 12 angeordnet, wobei ein zweites Querfederelement 30 an dem zweiten Rastbereich 27 des Befestigungsbereiches 18 angeordnet ist. Die Querfederelemente 29 und 30 können auch als Blattfedern bezeichnet werden, welche auch die Gewichtskraft des Behälters 5 aufnehmen können.

Der Grundkörper 9 ist mit seinen jeweiligen Komponenten einteilig hergestellt, also zum Beispiel aus einem geeigneten Kunststoff geformt, wobei die Vorspannung durch Verbinden der Verbindungsbereiche 16 und 19 (in sich einhängen oder mittels separater Feder) nachträglich erzeugt wird.

Figur 3 zeigt einen ungespannten Zustand des Grundkörpers 9, wobei Figur 4 einen vorgespannten Zustand des Grundkörpers 9 zeigt. Dabei sind die beiden Verbindungsbereiche 16 und 19 miteinander verbunden, indem die beiden hakenähnlichen Verbindungsbereichsenden ineinander greifen. Erkennbar ist im vorgespannten Zustand, dass die Stege 20 in Richtung zur Fußseite 23 ausgelenkt sind.

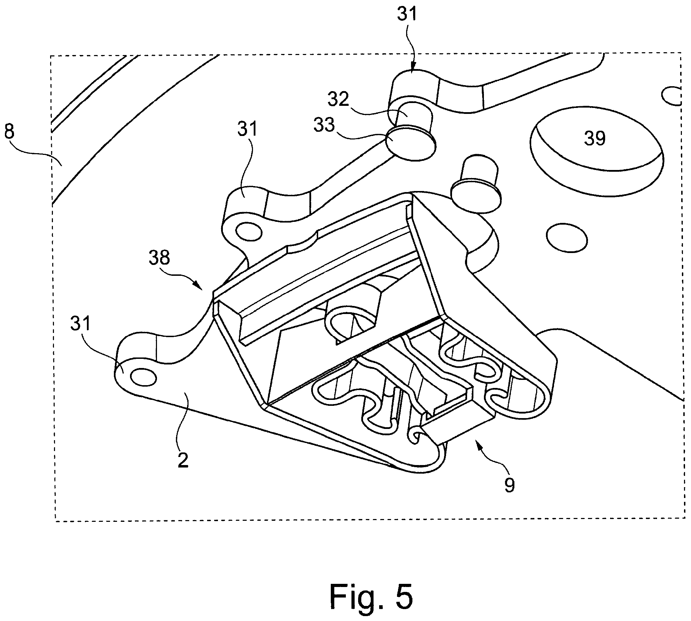

Eine Montageabfolge des Grundkörpers 9 an der Transportvorrichtung bzw. an dem Einleitstern 2 ist beispielhaft in den Figuren 5 bis 7 dargestellt. An dem Einleitstern 2 sind, wie ersichtlich, keine kompliziert herzustellenden Schleif- oder Schiebesterntaschen eingebracht, sondern einfache Stegaufnahmen 31 angeordnet. An den Stegaufnahmen 31 sind Befestigungsbolzen 32 angeordnet. Diese können mit den Stegaufnahmen 31 verschraubt, verschweißt oder verklebt sein, um nur einige Verbindungsarten beispielhaft zu nennen. Die Befestigungsbolzen 32 weisen fußseitig einen Flanschring 33, also eine bezogen auf den Bolzenkörper radiale Erweiterung auf. Beispielhaft sind zwei in Radialrichtung fluchtende Befestigungsbolzen 32 vorgesehen.

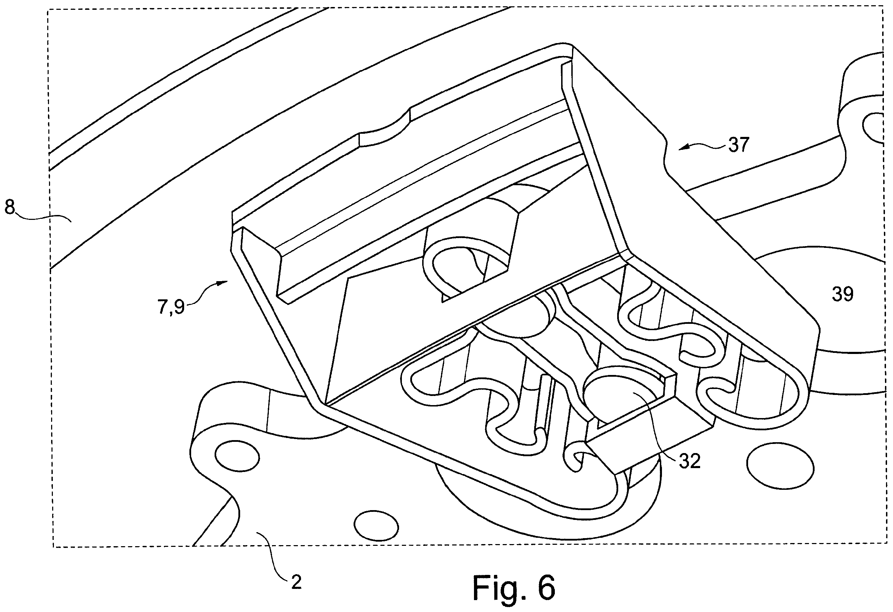

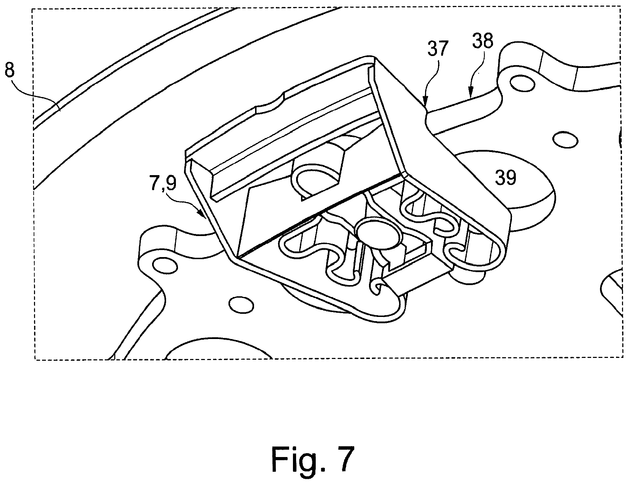

Bei dem in Figur 5 dargestellten Montageablauf, ist der Grundkörper 9 mit seinen Aufnahmebereichen 24 und 26 unterhalb der fixierten Befestigungsbolzen 32 angeordnet. Der Grundkörper 9 wird so über die Befestigungsbolzen 32 geführt, bis die Flanschringe 33 die jeweiligen Unterkanten hintergreifen (Figur 6). Ersichtlich ist auch, dass fußseitig seitens des plattenartigen Verschlusselementes 34 quasi eine Bewegungsbegrenzung erreicht wird, wobei sich das freie Bolzenende 35 an dem plattenartigen Verschlusselement 34 anlegt (Figur 6). Mittels eines radial nach innen gerichtetem Verschieben des Grundkörpers 9 werden die Befestigungsbolzen 32 in den jeweiligen Rastbereich 25 oder 27 überführt (Figur 7). Dies kann vorteilhaft werkzeuglos geschehen. Eine Demontage wäre ebenso einfach werkzeuglos durchzuführen.

Bei der Montage (Figuren 5 bis 7) sind die beiden Verbindungsbereiche 16 und 19 noch nicht miteinander verbunden. Dies geschieht vorteilhaft erst wenn die Halteeinrichtung 7 bzw. der Grundkörper 9 montiert ist. Dies vereinfacht ein Einführen der Befestigungsbolzen 32 in die Aufnahmebereiche 24 und 26, da deren lichte Öffnung so etwas vergrößert ist und erhöht auch die Haltekraft der Rastbereiche 24 und 26, wenn die Vorspannung wirkt. Im montierten Zustand ist der Grundkörper 9 so lagesicher gehalten, wobei auch ein ungewolltes Verschieben entgegen der zuvor beschriebenen Fügerichtung grundsätzlich ausgeschlossen ist. Die beiden Rastbereiche 25 und 27 klemmen den Grundkörper 9 quasi formschlüssig an der Transportvorrichtung bzw. an dem Einleitstern 2 fest. Natürlich kann der Grundkörper 9 auch an dem Ausleitstern 4 angeordnet sein, wobei die genannten Beispiele natürlich nicht beschränkend wirken sollen.

In den Figuren 5 bis 7 ist auch die besondere Ausführung der einzelnen Komponenten des Grundkörpers 9 erkennbar.

Die äußeren Federstege 10 sind zur Wirkseite 11 hin quasi dreieckförmig ausgeführt, und bilden mit ihren Stirnseiten quasi ein Lagerpodest für die Auflage 12. Das erste Querfederelement 29 ist quasi senkrecht zur Auflage 12 angeordnet. Das zweite Querfederelement 30 ist quasi fliegenartig ausgeführt, also an der Seite breiter als in der Mitte.

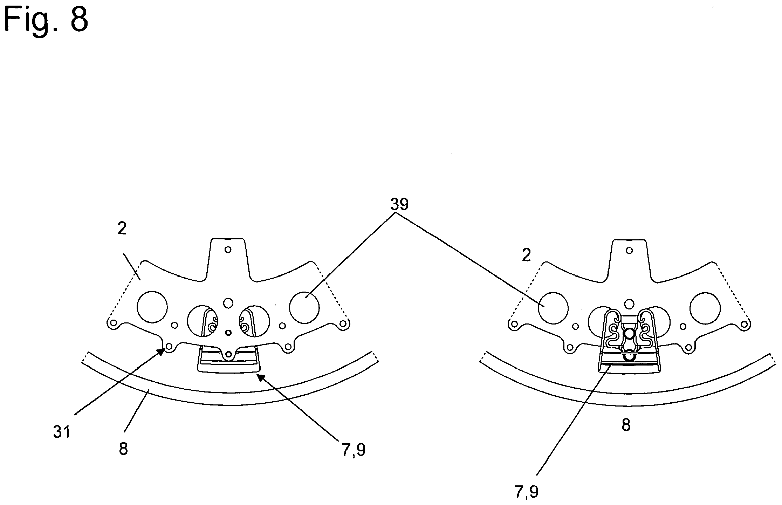

Der montierte Zustand ist in Figur 8 links in Aufsicht erkennbar, wobei in Figur 8 rechts die Ansicht von unten erkennbar ist. Der Figur 8 ist entnehmbar, dass die Auflage 12 mit ihrer freien Kante in Richtung zur Stützkurve 8 orientiert ist.

In Figur 8 ist aus Übersichtsgründen lediglich ein einziger Grundkörper 9 mit der Transportvorrichtung verbunden. Selbstverständlich sind mehrer Halteeinrichtungen 7 bzw. Grundkörper 9 vorgesehen, wobei an jeder Stegaufnahme 31 auch eine Halteeinrichtung 7 bzw. ein Grundkörper 9 angeordnet werden kann.

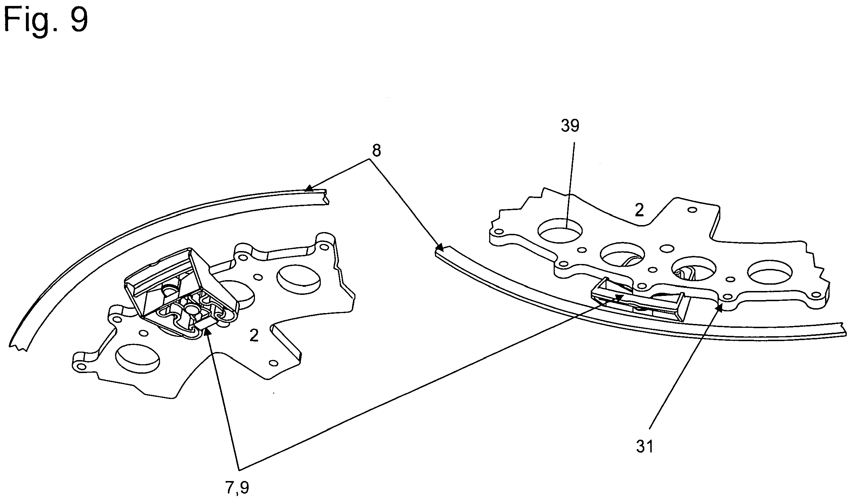

In Figur 9 ist die Montagesituation aus Figur 8 in perspektivischer Ansicht dargestellt.

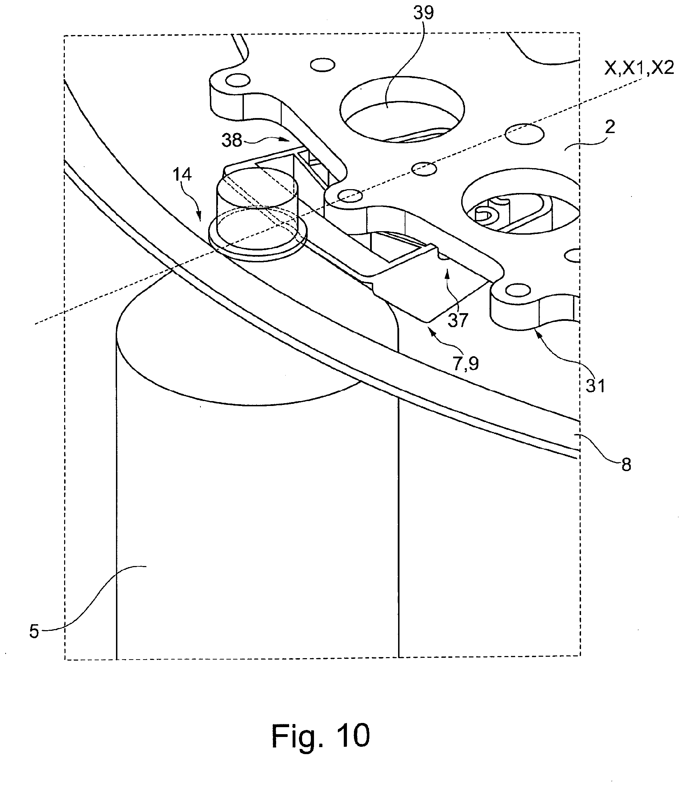

In Figur 10 ist beispielhaft eine Transportsituation dargestellt, wobei die Auflage 12 unter den Neckring 14 des Behälters 5 greift, welcher auf der gegenüberliegenden Seite auf der Stützkurve 8 abrutscht. Erkennbar ist in Figur 10, dass der Grundkörper 9 an seinen äußeren Federstegen 10 stufenartig ausgeführt, wobei die Stufe 37 in etwa im Bereich des Querfederelementes 30 angeordnet ist. Die Stufe 37, welche auch in den Figuren 6 und 7 gezeigt ist, kann sich an der Kante des Einleitsterns 2 anlegen, wie in Figur 10 zu erkennen ist. Ersichtlich ist, dass der Grundkörper 9 mit seiner Mittelachse X deckungsgleich zur Mittelachse X2 der Stegaufnahme 31 ist. Zwischen in Umfangsrichtung gesehen einander benachbarten Stegaufnahmen 31 sind Ausnehmungen 38 angeordnet, welche in einfachster geometrischer Ausführung, anstelle komplizierter schleif- oder schiebesternartiger Ausschnitte hergestellt sind. Die Ausnehmungen 38 sind einfach U-förmig mit den Stegaufnahmen 31 als U-Schenkel ausgeführt. Mittels des Grundkörpers 9 werden die Behälter 5 auf die erforderliche Teilung gebracht, weswegen der Grundkörper 9 auch die Funktion der Teilung übernimmt.

Wie z.B. in den Figuren 8 bis 10 erkennbar, sind noch Öffnungen 39 im Einleitstern 2 eingebracht, so dass eine offene Bauweise möglich ist, wodurch Reinigungsarbeiten aber auch Montage- bzw. Demontagetätigkeiten sehr leicht durchführbar sind. Die Materialausnehmungen wirken sich natürlich auch gewichtsreduzierend aus.

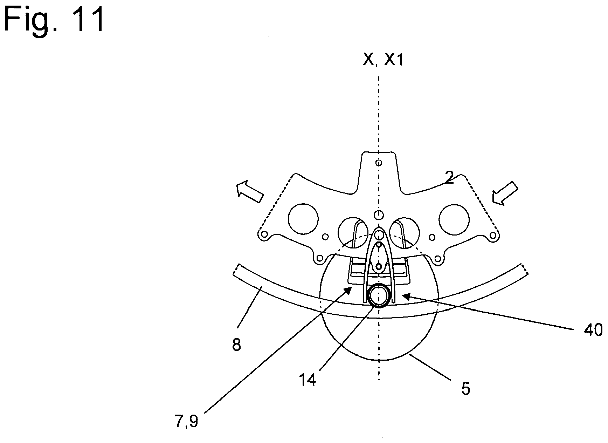

Bei dem in Figur 11 dargestellten Ausführungsbeispiel ist dem Grundkörper 9 noch ein Schiebe- und Führungselement 40 zugeordnet, bzw. beispielhaft an dem Einleitstern 2 angeordnet.

Das Schiebe- und Führungselement 40 ist in Aufsicht gesehen etwa parabelförmig ausgeführt. Befestigungsseitig ist das Schiebe- und Führungselement 40 z.B. mit dem Einleitstern 2 verschraubt, wobei natürlich an andere geeignete Verbindungsarten denkbar sind.

Zielführend ist, dass das Schiebe- und Führungselement 40 zumindest mit einem seiner Schenkel an der Mündung des Behälters 5 bzw. mit der Mündungswand oberhalb des Neckrings 14 anliegt, um den Behälter 5 bei dem Transport in Transportrichtung zu unterstützen.

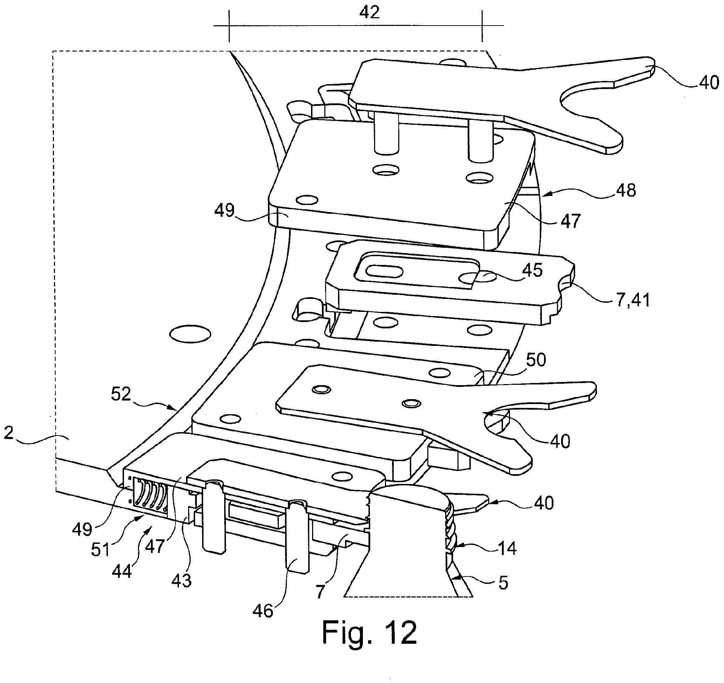

Die parabelförmige Ausgestaltung des Schiebe- und Führungselement 40 ist natürlich nur eine von vielen möglichen Ausführungen. Zielführend ist aber, wenn zumindest zwei Stege vorhanden sind, welche eine Öffnung begrenzen, in welche Öffnung sich die Mündung des Behälters einlegen kann. In Figur 12 ist beispielsweise ein gabelartiges Schiebe- und Führungselement 40 gezeigt.

Bei dem in Figur 11 gezeigten Ausführungsbeispiel ist das Schiebe- und Führungselement 40 auf einer zum Grundkörper 9 gegenüberliegenden Seite des beispielhaften Einleitsterns 2 angeordnet. Figur 12 zeigte eine weitere vorteilhafte Ausgestaltung der Halteeinrichtung 7 mit einem an Ober- und/oder Unterseite geschlossenen Grundkörper 41, wobei das Schiebe- und Führungselement 40 auf derselben Seite der Transportvorrichtung angeordnet ist wie der Grundkörper 41. Der beispielhaft dargestellte Einleitstern 2 ist an seinem Randbereich 42 materialmäßig verjüngt.

Der Grundkörper 41 gemäß der Ausführung nach Figur 12, die nicht Teil der Erfindung ist, weist eine Anlagekante 43 auf, welche in eine Ausnehmung 44 des Randbereiches 42 eingreift. In der Ober- und/oder Unterseite ist jeweils ein sich in Radialrichtung des Einleitsterns 2 erstreckendes Langloch 45 eingebracht, welche zur Aufnahme von Befestigungsbolzen 46 dienen, wobei auch eine Schiene, Nut, etc. mit entsprechendem Gegenstück als Führungselemente vorgesehen werden können. Der Grundkörper 41 wird von einem Gehäuse 47 umfasst, welches stirnseitig eine Öffnung 48 aufweist, durch welche die Wirkseite hinausragt. Gegenüberliegend und seitlich weist das Gehäuse 47 Auflagestege 49 auf, welche auch die stirnseitige Öffnung 48 seitlich dazu begrenzen. An dem Gehäusedeckel 50 ist das Schiebe- und Führungselement 40 angeordnet. Die Befestigungsbolzen 46 durchgreifen den Randbereich 40 des Einleitsterns 2, den Grundkörper 41, das Gehäuse 47 und das Schiebe- und Führungselement 40. Zwischen dem hinteren Auflagesteg 49 des Gehäuses 47 und der Anlagekante 43 es Grundkörpers 41 kann noch ein oder mehrere Federelemente 51 angeordnet sein, wie beispielhaft dargestellt ist. Mittels des Federelementes 51 kann der Grundkörper 41 in Radialrichtung verschoben werden, ggf. zusätzlich zu einer zusätzlichen elastischen Ausführung des Grundkörpers 41 selbst.

Der Grundkörper 41 greift unter den Neckring 14 des Behälters 5. Das Gehäuse 47 fungiert unter anderem als Höhenausgleich, so dass das Schiebe- und Führungselement 40 oberhalb des Neckrings 14 angreift. Die Materialverjüngung im Randbereich 42 ist mittels einer Übergangsschrägen 52 verwirklicht.

In weiter möglicher Ausführung kann der Grundkörper 41 auch allein mittels des Federelementes 51 verschoben, bzw. sich an die jeweiligen Situationen anpassen.

Die Erfindung eignet sich auch dazu, eine Behälterbehandlungsmaschine hinsichtlich thermisch bedingter Änderungen betriebssicherer auszuführen. In Figur 1 ist beispielsweise eine Durchmesseränderung des Hauptsterns 3 mittels gestrichelter Linie 52 angedeutet. Die Durchmesseränderung kann daher rühren, dass z.B. eine Heißabfüllung (z.B. 90°) stattfindet, wodurch sich der Hauptstern 3 physikalisch bedingt vergrößert. Möglich ist aber auch, z.B. bei einer Kaltabfüllung (z.B. 6°C) wodurch sich der Hauptstern 3 in seinem Durchmesser verkleinert. Dadurch wird aber auch die Übergabe von dem Einleitstern 2 auf den Hauptstern 3 und von diesem auf den Ausleitstern 4 beeinflusst. Diese Durchmesseränderung kann aber vorteilhaft von dem Grundkörper 9 und/oder 41 bzw. von der Halteeinrichtung 7 ausgeglichen werden.

**Bezugszeichenliste:**

| | | | |
|---|---|---|---|
| 1 | Behälterbehandlungsmaschine | 26 | Zweiter Aufnahmebereich |
| | | 27 | Zweiter Rastbereich |
| 2 | Transportvorrichtung/Einleitstern | 28 | Seitensteg |
| | | 29 | Querfederelement |
| 3 | Transportvorrichtung/ Hauptstern | 30 | Querfederelement |
| | | 31 | Stegaufnahme |
| 4 | Transportvorrichtung/ Ausleitstern | 32 | Befestigungsbolzen |
| | | 33 | Flanschring |
| 5 | Behälter | 34 | Verschlusselement |
| 6 | Förderer | 35 | Freies Ende von 32 |
| 7 | Halteeinrichtung | 36 | Überleitelement |
| 8 | Stützkurve | 37 | Stufe |
| 9 | Grundkörper | 38 | Ausnehmung |
| 10 | Äußerer Federsteg | 39 | Öffnung |
| 11 | Wirkseite | 40 | Schiebe- und Führungselement |
| 12 | Auflage | | |
| 13 | Ausnehmung in 12 | 41 | Grundkörper |
| 14 | Neckring | 42 | Randbereich |
| 15 | Federarm | 43 | Anlagekante |
| 16 | Erster Verbindungsbereich | 44 | Ausnehmung |
| 17 | Innere Federelemente | 45 | Langloch |
| 18 | Befestigungsbereich | 46 | Befestigungsbolzen |
| 19 | Zweiter Verbindungsbereich | 47 | Gehäuse |
| 20 | Steg | 48 | Öffnung |
| 21 | Innenkörper | 49 | Auflagesteg |
| 22 | Kopfseite | 50 | Gehäusedeckel |
| 23 | Fußseite | 51 | Federelement |
| 24 25 | Erster Aufnahmebereich Erster Rastbereich | 52 | Übergangsschräge |

## Patentansprüche

1. Behältertransportvorrichtung, auch als sogenannte Schleif- oder Schiebesterne bezeichnet, welche eine Vielzahl von Halteeinrichtungen (7) zum Halten und Transportieren von Flaschen oder dergleichen Behälter (5) aufweist, und weiterhin mindestens eine den Halteeinrichtungen (7) auf einer Teilstrecke gegenüber angeordneten Konterauflage (8), wobei die jeweilige Halteeinrichtung (7) einen zur Transportvorrichtung (2, 3, 4) separaten Grundkörper (9, 41) aufweist, welcher zu einer Konterauflage (8) zumindest in Richtung zu einem Zentrum der Transportvorrichtung (2, 3, 4) so ausgeführt ist, dass der Grundkörper (9, 41) sich mit seiner Auflage (12) selbsttätig anpassend an einen Behälterdurchmesser unterhalb eines Neckrings (14) des Behälters (5) an diesen und an den Neckring (14) anlegt, und dass die Halteeinrichtung (7) mit einem Befestigungsbereich (18) lösbar mit der Transportvorrichtung (2, 3, 4) verbindbar ist, wobei weiterhin der Grundkörper (9, 41) in Radialrichtung gesehen elastisch nachgiebig und mit seinen jeweiligen Komponenten einteilig hergestellt ist, **dadurch gekennzeichnet, dass** - der Grundkörper (9, 41) einen Innenkörper (21) aufweist, welcher den Befestigungsbereich (18) des Grundkörpers (9, 41) bildet,
- der Grundkörper (9, 41) zwei gegenüberliegenden äußeren Federstege (10) und zwei gegenüberliegenden inneren Federelemente (17) aufweist, und
- der Grundkörper (9, 41) Querfederelemente (29, 30) aufweist, die sich von einem äußeren Federsteg (10) zum gegenüberliegenden äußeren Federsteg (10) erstrecken,
- wobei die Auflage (12) sich quer zwischen den beiden äußeren Federstegen (10) erstreckt,
- wobei die inneren Federelemente (17) über einen Steg (20) mit dem Innenkörper (21) verbunden sind,
- wobei die äußeren Federstege (10) einen gebogen ausgeführten ersten Verbindungsbereich (16) haben;
- wobei die inneren Federelemente (17) einen zweiten Verbindungsbereich (19) aufweisen, welcher zum ersten Verbindungsbereich (16) korrespondierend ausgeführt ist, und
- wobei der Grundkörper (9, 41) durch ein Verbinden der Verbindungsbereiche (16, 19) der äußeren Federstege (10) und der inneren Federelemente (17) vorgespannt ist.

2. Behältertransportvorrichtung nach Anspruch 1, **dadurch gekennzeichnet, dass** der Grundkörper (9, 41) als Teilungselement ausgeführt ist.

3. Behältertransportvorrichtung nach einem der vorhergehenden Ansprüche, **dadurch gekennzeichnet, dass** der Innenkörper (21) zumindest einen Aufnahmebereich (24, 26) und zumindest einen Rastbereich (25, 27) aufweist.

4. Behältertransportvorrichtung nach einem der vorhergehenden Ansprüche, **dadurch gekennzeichnet, dass** der Grundkörper (9, 41) mittels Befestigungsbolzen (32) an der Transportvorrichtung (2, 3, 4) werkzeuglos montierbar und werkzeuglos demontierbar ist.

5. Behältertransportvorrichtung nach einem der vorhergehenden Ansprüche, **gekennzeichnet durch** ein Schiebe- und Führungselement (40) welches oberhalb eines Angriffspunktes des Grundkörpers (9, 4 1), bevorzugt oberhalb des Neckrings (14) an dem Behälter (5) angreift.

6. Behältertransportvorrichtung nach einem der vorhergehenden Ansprüche, **dadurch gekennzeichnet, dass** der Grundkörper (9, 41) von einem Gehäuse (47) umgeben ist, an dessen Gehäusedeckel (50) ein Schiebe- und Führungselement (40) angeordnet ist.

## Claims

1. Container transport device, also designated as a grinding or sliding star wheel, which comprises a plurality of holding devices (7) for holding and transporting bottles or similar containers (5), and further comprises at least one counter support (8) arranged opposite the holding devices (7) on a part segment, wherein the respective holding device (7) comprises a base body (9, 41) separate from the transport device (2, 3, 4), which is configured in relation to a counter support (8) at least in the direction to a centre of the transport device (2, 3, 4) in such a way that the base body (9, 41) contacts with its contact part (12), automatically adjusting to a container diameter, underneath a neck ring (14) of the container (5) and in contact with this and with the neck ring (14), and that the holding device (7) is detachably connectable by a securing region (18) to the transport device (2, 3, 4), wherein further the base body (9, 41) seen in the radial direction is elastically pliable, and is produced as one piece with its respective components, **characterised in that**
- the base body (9, 41) comprises an inner body (21), which forms the securing region (18) of the base body (9, 41),
- the base body (9, 41) comprises two opposed outer spring webs (10) and two opposed inner spring elements (17), and
- the base body (9, 41) comprises transverse spring elements (29, 30), which extend from an outer spring web (10) to the opposite outer spring web (10),
- wherein the contact part (12) extends transversely between the two outer spring webs (10),
- wherein the inner spring elements (17) are connected by means of a web (20) to the inner body (21),
- wherein the outer spring webs (10) have a first connection region (16) configured as curved,
- wherein the inner spring elements (17) comprise a second connection region (19), which is configured such as to correspond to the first connection region (16), and
- wherein the base body (9, 41) is pre-tensioned by a connection of the connection regions (16, 19) of the outer spring webs (10) and the inner spring webs (17).

2. Container transport device according to claim 1, **characterised in that** the base body (9, 41) is configured as a dividing element.

3. Container transport device according to any one of the foregoing claims, **characterised in that** the inner body (21) comprises at least one receiving region (24, 26) and at least one latch engagement region (25, 27).

4. Container transport device according to any one of the foregoing claims, **characterised in that** the base body (9, 41) can be mounted without tools on the transport device (2, 3, 4) by means of securing bolts (32), and can be detached without tools.

5. Container transport device according to any one of the foregoing claims, **characterised by** a sliding and guiding element (40), which engages with the container (5) above an engagement point of the base body (9, 4, 1), preferably above the neck ring (14).

6. Container transport device according to any one of the foregoing claims, **characterised in that** the base body (9, 41) is surrounded by a housing (47), arranged on the housing cover (50) of which is a sliding and guiding element (40).

## Revendications

1. Dispositif de transport de contenants, également désigné par ce qu'on appelle des étoiles abrasives ou coulissantes, lequel présente une pluralité de systèmes de maintien (7) servant à maintenir et à transporter des bouteilles ou des contenants (5) similaires, et par ailleurs au moins un contre-support (8) disposé en vis-à-vis des systèmes de maintien (7) sur un tronçon partiel, dans lequel le système de maintien (7) respectif présente un corps de base (9, 41) séparé par rapport au dispositif de transport (2, 3, 4), lequel est réalisé par rapport à un contre-support (8) au moins en direction vers un centre du dispositif de transport (2, 3, 4) de sorte que le corps de base (9, 41) vienne se placer par son support (12), en s'adaptant automatiquement à un diamètre de contenant, sous une bague de col (14) du contenant (5), contre celui-ci et la bague de col (14), et que le système de maintien (7) puisse être relié de manière amovible au dispositif de transport (2, 3, 4) par une zone de fixation (18), dans lequel par ailleurs le corps de base (9, 41) est fabriqué de manière souple élastiquement, dans une vue dans la direction radiale, et d'un seul tenant avec ses composants respectifs, **caractérisé en ce que**
- le corps de base (9, 41) présente un corps intérieur (21), qui forme la zone de fixation (18) du corps de base (9, 41),
- le corps de base (9, 41) présente deux éléments de liaison élastiques extérieurs (10) se faisant face et deux éléments élastiques intérieurs (17) se faisant face, et
- le corps de base (9, 41) présente des éléments élastiques transversaux (29, 30), qui s'étendent depuis un élément de liaison élastique extérieur (10) vers l'élément de liaison élastique extérieur (10) faisant face,
- dans lequel le support (12) s'étend de manière transversale entre les deux éléments de liaison élastiques extérieurs (10),
- dans lequel les éléments élastiques intérieurs (17) sont reliés au corps intérieur (21) par l'intermédiaire d'un élément de liaison (20),
- dans lequel les éléments de liaison élastiques extérieurs (10) ont une première zone de liaison (16) réalisée de manière cintrée ;
- dans lequel les éléments élastiques intérieurs (17) présentent une deuxième zone de liaison (19), qui est réalisée de manière à correspondre à la première zone de liaison (16), et
- dans lequel le corps de base (9, 41) est précontraint en reliant les zones de liaison (16, 19) des éléments de liaison élastiques extérieurs (10) et des éléments élastiques intérieurs (17).

2. Dispositif de transport de contenants selon la revendication 1, **caractérisé en ce que** le corps de base (9, 41) est réalisé en tant qu'élément de séparation.

3. Dispositif de transport de contenants selon l'une quelconque des revendications précédentes, **caractérisé en ce que** le corps intérieur (21) présente au moins une zone de logement (24, 26) et au moins une zone d'enclenchement (25, 27).

4. Dispositif de transport de contenants selon l'une quelconque des revendications précédentes, **caractérisé en ce que** le corps de base (9, 41) peut être monté sans outil et peut être démonté sans outil au moyen de boulons de fixation (32) au niveau du dispositif de transport (2, 3, 4).

5. Dispositif de transport de contenants selon l'une quelconque des revendications précédentes, **caractérisé par** un élément coulissant et de guidage (40), qui s'engage au niveau du contenant (5) au-dessus d'un point d'engagement du corps de base (9, 41), de manière préférée au-dessus de la bague de col (14).

6. Dispositif de transport de contenants selon l'une quelconque des revendications précédentes, **caractérisé en ce que** le corps de base (9, 41) est entouré par un boîtier (47), au niveau du couvercle de boîtier (50) duquel est disposé un élément coulissant et de guidage (40).
